**Europäisches Patentamt**

(19) **European Patent Office**

**Office européen des brevets**

(11) Publication number : **0 367 758 B1**

(12) # EUROPEAN PATENT SPECIFICATION

(45) Date of publication of patent specification :
22.04.92 Bulletin 92/17

(51) Int. Cl.⁵ : **B01J 37/20**

(21) Application number : **87904353.7**

(22) Date of filing : **13.05.87**

(86) International application number :
**PCT/SE87/00235**

(87) International publication number :
**WO 88/08749 17.11.88 Gazette 88/25**

(54) **A METHOD FOR CONTROLLED CATALYST SULFIDATION.**

(43) Date of publication of application :
**16.05.90 Bulletin 90/20**

(45) Publication of the grant of the patent :
**22.04.92 Bulletin 92/17**

(84) Designated Contracting States :
**AT BE CH DE FR GB IT LI LU NL**

(56) References cited :
EP-A- 0 064 429
DE-B- 2 824 125
DE-B-24 060 234
GB-A- 1 000 829
SE-B- 384 453

(73) Proprietor : **SMEDLER, Gudmund**
**Anäsvägen 5 A**
**S-416 67 Göteborg (SE)**
Proprietor : **KÖLBY, Robert**
**Svartarp Asle**
**S-521 00 Falköping (SE)**

(72) Inventor : **SMEDLER, Gudmund**
**Anäsvägen 5 A**
**S-416 67 Göteborg (SE)**
Inventor : **KÖLBY, Robert**
**Svartarp Asle**
**S-521 00 Falköping (SE)**

(74) Representative : **Ferkinghoff, Claes-Göran et al**
**Awapatent AB Box 53252**
**S-400 16 Göteborg (SE)**

## Description

Hydrogenation of carbon monoxide (Fischer-Tropsch-methanization and related processes) and of polyunsaturated organic compounds are old and well known examples of industrial large scale hydrogenation processes where the catalyst selectivity is of vital economic importance. If the yield of desired products could be maximized in the reactor, the waste of raw material resulting from the production of by-products of low value would be avoided. Furthermore (and perhaps more important) the energy consumption and capital costs of the separation equipment would be minimized. In the light of to-day's tendency on the energy market, energy craving unit operations such as distillation could be expected to carry an increasing fraction of the total costs of the process industry in the future. This tendency is also reflected in the intensified research activities in the fields of catalyst development and reactor design during the last 15 years.

The requirement of a high catalyst activity (high production capacity per unit of catalyst mass) is very often in conflict with the requirement of a high selectivity (high preference for certain desired reactions and low activity for other undesired reactions). Some typical examples of commercially important hydrogenation processes where the conflict between catalyst activity and selectivity is pronounced are

* partial hydrogenation of polyunsaturated natural triglycerides for production of fatty acids. Saturated triglycerides (stearin) are not preferable in this case.

* Partial hydrogenation of acetylene to ethene. Ethene is perhaps the most important of all petrochemical compounds, and is for instance the starting material in the manufacture of the plastics polyethene and PVC. The saturated hydrogenation product (ethane) could in itself only be used as a fuel.

* Partial hydrogenation of 2-ethyl-hexenal to 2-ethyl-hexanal for the production of octanoic acid. The full-hydrogenated product (2-ethyl-hexanol) has quite different properties and is used for PVC-softeners.

The development of selective catalysts has, in principal, been following the lines listed below

* Replacement of the active metal component. Palladium has, in contrast to nickel, appeared to be very selective in the hydrogenation of for example acetylene and unsaturated aldehydes. A change of the active component is often (as in this case) associated with increased catalyst costs.

* Alloying of the active metal with another, less active, metal. Ni/Cu alloys have in some cases shown a remarkably higher selectivity than conventional nickel catalysts. A problem is, however, the surface enrichement of one of the components at elevated temperatures.

* Poisoning of the catalyst by means of a sulfur compound. Sulfur, that in general is causing severe problems through unwanted catalyst deactivation, can interact with metal catalysts and give rise to the formation of a new type of catalyst sites, with a substantially higher selectivity than the original ones. This technique must however be applied under rigorous control of the process conditions, as otherwise a total deactivation could take place.

It is known since long ago that nickel/sulfur-catalysts (NiS, $Ni_2S$ and $Ni_3S_2$) give a much higher selectivity in the hydrogenation of edible oils than nickel catalysts.

In the past, elementary sulfur was added to the hydrogenation reactor in order to modify the nickel catalyst, but the results were in general hard to predict. Nowadays, Ni/S-catalysts are marketed and the results are more reproducible::

Higher selectivity and lower activity in comparison with ordinary nickel catalysts.

The problem for the process industry is that one is forced to choose one out of a limited number of catalysts that are sold on the market, at a cost that is drastically increasing when the requirements on the catalyst specifications increase.

The present invention is concerned with a new and flexible method for an application specific optimal control of the degree of catalyst poisoning that could be directly used in the customers plant. By this method, it is possible to tailor a catalyst that is optimal for the temporary feedstock and desired products, starting from a conventional nickel-catalyst.

TECHNIQUE

The method is based on selective chemisorption, which in this case means that small amounts of $H_2S$ is added, through a certain number of pulses or at a low flow under a certain time, to a reactor where the main rection takes place. $H_2S$ that is irreversibly adsorbed at moderate temperatures, is hindered to adsorb everywhere on the catalyst surface, since a large fraction of the surface is covered by adsorbed reaction participants. In addition, the method is making use of a mass transfer effect: At process conditions where the rate constants for hydrogenation as well as for $H_2S$ adsorption are very high, the observed rate will be entirely controlled by the external mass transfer rates of $H_2$ and $H_2S$, respectively. The concentrations of these species at the catalyst surface (where the poisoning takes place) will then be very much lower than the corresponding

EP 0 367 758 B1

saturation concentrations, an effect that can be used for kinetic and thermodynamic control of the poisoning process.

EXPERIMENTAL METHOD

In a glass reactor provided with a turbine impeller was charged 400 ml of sunflower oil and 20 g of Ni-catalyst (82% Ni supported on an alumina-silica-carrier). The mixture was heated to 180°C under nitrogen atmosphere at a stirrer rate of 1200 r.p.m. before the hydrogenation was initiated. The hydrogen flow was 25 ml/s (1 atm, 25°C) during the poisoning process. By means of a gas dosing loop of known volume (5.43 ml) different amounts of $H_2S$ were introduced to a mixing flask, from where the main hydrogen flow was carrying the $H_2S$ into the hydrogenation reactor. The results from the different poisoning experiments were continuously monitored by means of an on-line flamephotomultiplicator detector that made possible a fast and easy determination of the $H_2S$-uptake of the catalyst. The hydrogenation time was in all cases 70 minutes, no matter the amount of $H_2S$ added.

By the method just described, 8 different catalyst samples were prepared through the addition of 4, 8, 10, 15, 20, 25, 34, and 60 loops of $H_2S$, respectively. From each one of these samples, 0.12 g of catalyst was withdrawn for activity and selectivity tests in a slurry reactor operating under kinetic conditions (eliminated mass transfer limitations). The conditions in the slurry reactor were: $P_{H2}$ = 5.0 atm, Temp.= 180°C. Hydrogen flow rate = 5 ml/s (1 atm. 25°C), catalyst loading = 0.12 g and stirrer rate 1800 r.p.m. As references, the unpoisoned nickel catalyst and a commercially available Ni/S-catalyst with the same Ni contents, were used.

The results, that are summarized in appendix 1, show that the maximum concentration of mono-unsaturated fatty acid is practically independent of the degree of poisoning, while the trans/cis-ratio of the mono-unsaturated fatty acid is directly related to the degree of poisoning. Morever, the same table indicates that the activities of our Ni/S-catalysts are in all cases significantly higher than is the activity of the commercial Ni/S-catalyst, although the Ni-contents are the same.

To summarize, it is clearly demonstrated that our method provides an easy way to modify the conventional nickel catalyst in such a way that its selectivity is drastically increased while the activity is still much higher than that of the commercially available Ni/S-catalyst. In addition, it is also shown that the method makes it possible to poison a limited fraction of the catalyst surface, an aspect that makes the method flexible for varying operational conditions in the plant.

3

Appendix 1.

Selectivity vs. sulphur treatment severity.

Distribution of mono-unsaturated isomeres.

| Loops added (H$_2$S) | cis | trans | total |
|---|---|---|---|
| 0 | 13.48 | 57.22 | 70.7 |
| 10 | 7.67 | 59.87 | 67.54 |
| 20 | - | 67.52 | 67.52 |
| 25 | - | 68.23 | 68.23 |
| 34 | - | 70.03 | 70.03 |
| 60 | - | 71.49 | 71.49 |
| Commercial NiS-catalyst | - | 71.93 | 71.93 |

note 1. The composition is given in mole percentages.

note 2. All hydrogenations performed at 5 bar 180°C.

Activity comparison of the samples above, expressed as initial rate of reaction.

| Loops added (H$_2$S) | $r_{obs}/mol.m_L^{-3}.s^{-1}$ (activity) |
|---|---|
| 0 | 1.691 |
| 10 | 0.454 |
| 20 | 0.429 |
| 25 | 0.342 |
| 34 | 0.231 |
| 60 | 0.235 |
| Commercial NiS-catalyst | 0.103 |

## Claims

1. A method for controlled catalyst sulfidation, **characterized** by:

Sulfiding of nickel-containing catalysts through the addition of H$_2$S to a liquid phase hydrogenation reactor during hydrogenation of natural oils, thereby causing the catalyst sulfidation to occur simultaneously with the hydrogenation reaction.

## Patentansprüche

1. Verfahren zur gesteuerten Katalysatorsulfidierung, **gekennzeichnet** durch

Sulfidierung von nickelhaltigen Katalysatoren durch Zugabe von H$_2$S zu einem Flüssigkeitsphasenhydrierreaktor während der Hydrierung von natürlichen Ölen, wodurch die Katalysatorsulfidierung zur gleichen Zeit wie die Hydrierungsreaktion erfolgt.

## Revendications

1. Procédé de sulfuration contrôlée de catalyseurs, caractérisé par :

la sulfuration de catalyseurs contenant du nickel par l'addition de H$_2$S à un réacteur d'hydrogénation en phase liquide durant l'hydrogénation d'huiles naturelles, provoquant ainsi la survenue simultanée de la sulfuration des catalyseurs et de la réaction d'hydrogénation.